# EUROPEAN PATENT APPLICATION

(11) **EP 1 205 292 A1**
(43) Date of publication of application: **15.05.2002**
(21) Application number: 01203626.5
(22) Date of filing: 25.09.2001
(51) Int. Cl.: B29C 47/30, B29C 47/08

(54) **Extruder die having replacable nozzle plate**

(30) Priority: 08.11.2000 IT MI002411
(71) Applicant: LATI Industria Termoplastici S.p.A., 21040 Vedano Olona (Varese) (IT)
(72) Inventor: Imbrighi, Diego, c/o Lati Industria, 21040 Vedano Olona (Varese) (IT)
(74) Representative: Siniscalco, Fabio

(57) **Abstract**

A die (8) for extruder (1) comprises a first plate (10) mounted on an extruder head (4) of the extruder and provided with first sections (14) of extrusion lands (9) that extend from an entry face (9a) to an intermediate exit face (9c). Also provided is a second plate (11) mounted detachably on the first plate (10) and provided with second sections (15) of the extrusion lands (9) that extend from an intermediate entry face (9d) to an exit face (9b). The first sections (14) have a frustoconical form while the second sections (15) have a cylindrical form.

## Description

The present invention relates to a die for an extruder comprising extrusion lands provided with an entry face, in communication with an extruder head that forms part of the extruder, and with an exit face through which the extruded material exits, the said entry face having a larger diameter than the said exit face.

The present invention also relates to an accessory for an extruder die and a method of varying the pressure of a material being extruded, inside an extruder die.

The die that is the subject of the present invention can be used in the extrusion of thermoplastic materials, such as polyamides and polycarbonates, for example, and is particularly intended for carrying out compounding, that is the industrial process by which it is possible to bring about significant modifications to the properties of a polymer by the means of the addition of additives, fillers, reinforcements and other polymers, and by intimate dispersion of these within the polymer.

This process can be done using extruders of e.g. both single-screw and twin-screw type, the latter consisting essentially of a barrel with preheated walls containing two co-rotating or counter-rotating screws arranged side by side and with parallel axes with each other and with respect to the cylinder.

As is known, while the polymer material to be processed is inside the extruder barrel, it is heated, blended, plasticized, degassed and finally extruded through a die, from which the polymer material emerges in so-called "spaghetti" form.

For this purpose there are known dies for extruding thermoplastic - especially reinforced and filled - thermoplastic materials, consisting of a plate containing extrusion lands and connected to a head of the extruder, the purpose of the latter being to transport the material from the exit face of the barrel, which contains the screw or the two screws, to the entry face of the die.

The extrusion lands extend through the thickness of the plate from an entry face to an exit face. The entry face is in communication with the extruder head in order to receive the material to be extruded, and the material is then extruded from the exit face in the form of spaghetti.

Referring to dies of known type, the extrusion lands comprise two sections which can be seen if the die plate is sectioned on a longitudinal plane with reference to the axis of the extrusion lands themselves.

The profile of the first section decreases in the direction of movement of the material being extruded and corresponds to a frustoconical configuration extending from the entry face of the die to an intermediate face that is smaller than the entry face.

The profile of the second section is however straight and corresponds to a cylindrical configuration extending with constant cross section from the abovementioned intermediate face to the exit face of the die.

The first section, namely the frustoconical portion, performs the task of conveying the molten polymer from the extruder head to the second cylindrical section, which gives the polymer material the final "spaghetti" configuration.

In particular, given a particular polymer and particular process conditions, i.e. the flow rate and temperature of the molten polymer, there is an acutely felt need to be able to vary the pressure drop experienced by the polymer on its way through the extrusion lands. The reason for this is that, by varying the pressure, it is possible to produce a corresponding variation in temperature and so vary the viscosity of the thermoplastic material. This variation of the process conditions can be achieved by varying the configuration of the extrusion lands. What must be considered, however, is that in known types of dies, this involves replacing the plate forming the die and therefore keeping a stock of a large number of plates in order to be able to vary the process conditions accordingly.

It is therefore clear that, in view of the foregoing, known dies have a number of drawbacks, mainly summarized in the fact that large numbers of them have to be kept and that each of them must be machined to produce the first and second sections of the corresponding extrusion lands. This approach makes for huge manufacturing costs, besides the difficulty of replacing the entire die plate.

The problem addressed by the present invention is how to devise and provide a die for an extruder, an accessory for an extruder die and a method of varying the pressure of a material being extruded, inside an extruder die, whose structural and functional characteristics are such as to satisfy the abovementioned need and, at the same time, to overcome the drawbacks cited with reference to the prior art.

This problem is solved with a die for an extruder of the abovementioned type, characterized in that it comprises, functionally connected to the head of the extruder, at least one first plate provided with first sections of the extrusion lands that extend from the said entry face to an intermediate exit face and, mounted detachably on the said first plate, at least one second plate provided with second sections of the extrusion lands that extend from an intermediate entry face to the said exit face.

In addition, this problem is solved with a die accessory comprising a plate provided with extrusion lands that extend from an intermediate entry face to an exit face which is approximately the same size as the said intermediate entry face, the said plate being connectable to the extruder in order to modify the pressure of the material being extruded.

Lastly, the abovementioned problem is solved with a method of varying the pressure of a material being extruded, inside an extruder die, the said material passing through first sections and second sections of extrusion lands, which method comprises varying the configuration of the second sections of the extrusion lands.

Other features and the advantages of the die, of the accessory and of the method according to the invention will be found in the description given below of a preferred example of an embodiment, provided by way of non-limiting indication, with reference to the accompanying figures, in which:
- Figure 1 is a side view in partial longitudinal section of a die applied to an extruder according to the present invention;
- Figure 2 shows an enlarged detail of Figure 1;
- Figure 3 is a view in longitudinal section on III-III as marked in Figure 2;

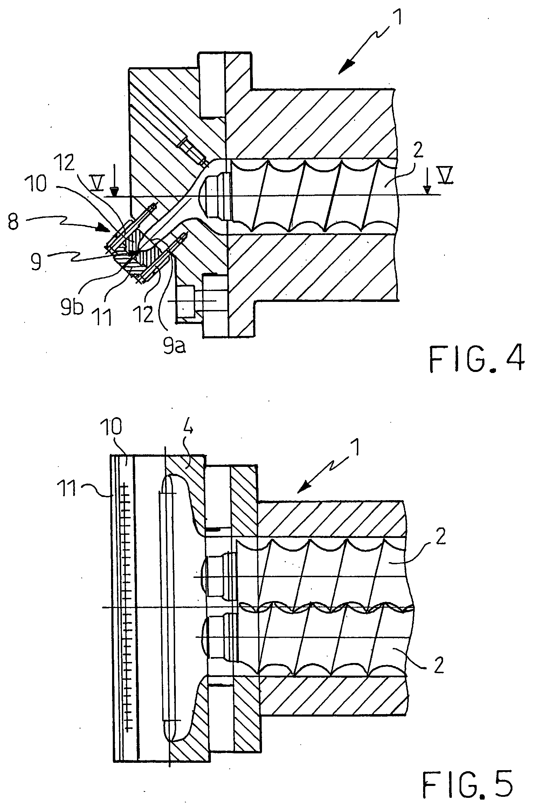

- Figure 4 illustrates a possible alternative application of the die according to the invention;
- Figure 5 is a view in longitudinal section on V-V as marked in Figure 4;
- Figure 6 is a front view of a detail of the die shown in Figure 1;
- Figure 7 is a sectional view of the detail of Figure 6 on VII-VII as marked in Figure 6;
- Figures 8 and 9 illustrate various possible variants of the detail shown in Figure 7;
- Figure 10 is a sectional view of the detail shown in Figure 6, taken on X-X as marked in Figure 6; and
- Figures 11, 12 and 13 are various diagrams of the pressure drop experienced by the polymer material in the final part of the extruder as a function of distance from the die exit.

Referring to the accompanying figures, 1 is an overall reference for an extruder for thermoplastic polymer materials, such as polyamides and polycarbonates, for example.

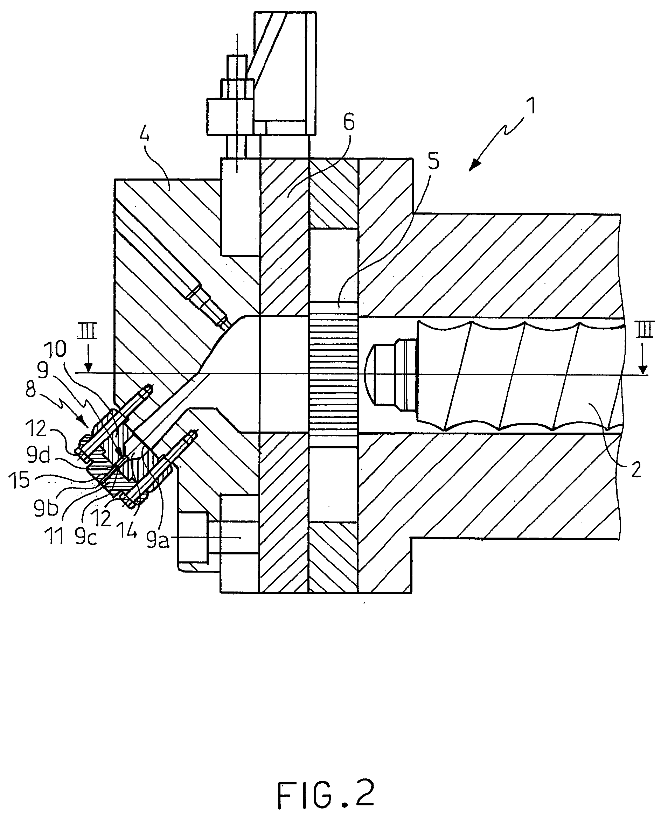

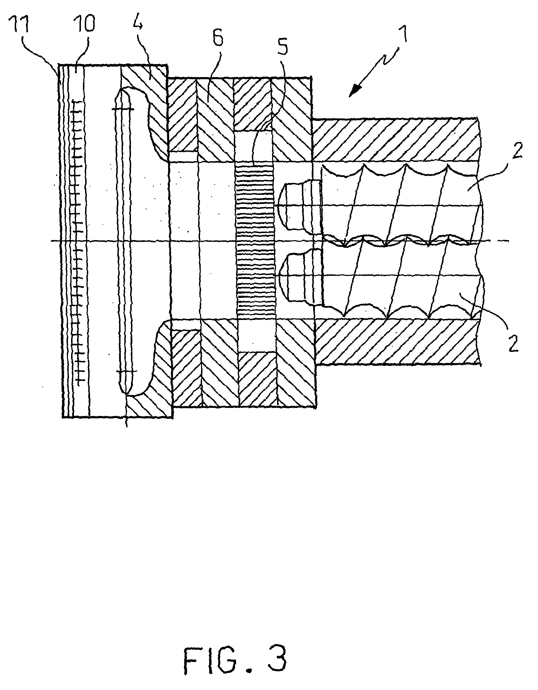

In particular, as illustrated in Figures 2 and 3, this extruder has two screws 2 arranged side by side with their longitudinal axes parallel, the screws being housed inside a barrel 3 defining the outer walls of the extruder. The walls of the barrel are generally heated and the two screws may be either co-rotating or counter-rotating to propel the plastic material along the barrel.

As already specified earlier, the extruder 1 is particularly used for reinforcing and filling thermoplastic polymers by intimate dispersion of additives, fillers, reinforcements and other polymers within the base polymer.

At the end of its passage through the barrel 3, the polymer material is extruded in a continuous cylindrical form generally known as "spaghetti".

The reference 4 denotes an extruder head mounted on the barrel 3 and in particular at the downstream end of the barrel 3 with reference to the direction of movement of the material through the barrel.

In the case of the twin-screw extruder, the extruder head connects the barrel exit face with the die entry face, at the same time changing the cross section through which the polymer material is passing from a roughly "figure-of-eight" section to an elliptical section.

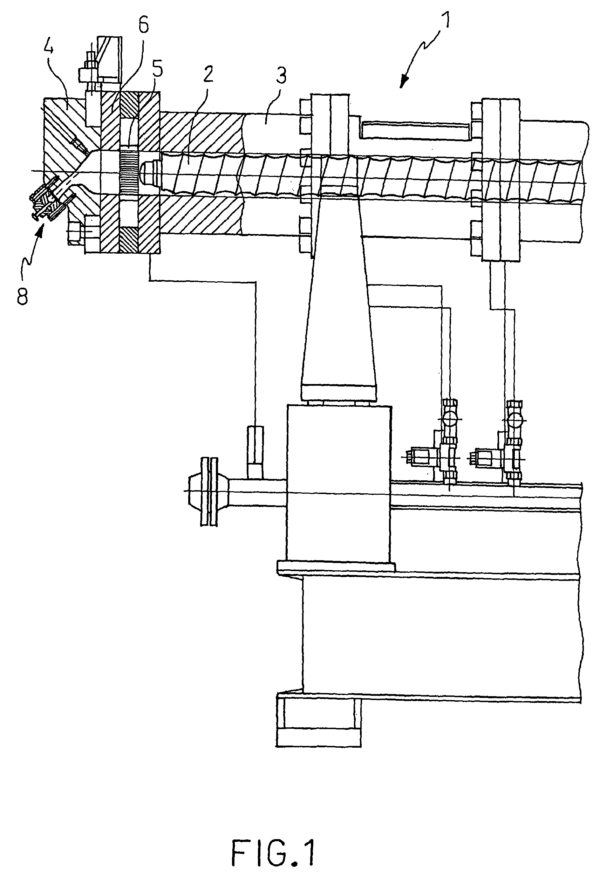

After the noses of the screws comes an extruder discharging region. As illustrated in Figures 1 to 3, this discharging region may comprise, in addition to the extruder head 4, a screen pack holder 5 fitted with a corresponding screen pack, and an extension 6.

The reference 8 is a general indication for a die, which defines the final element of the discharging region. In particular the die 8 is mounted on the extruder head 4 which in turn is mounted on the end of the extruder barrel, optionally with the abovementioned elements - that is the screen pack holder, the screen pack and the extension - inserted between them, upstream of the actual extruder head in the direction of movement of the polymer material through the extruder 1.

The die comprises extrusion lands 9 provided with an entry face 9a in communication with the head 4 of the extruder 1, and with an exit face 9b through which the extruded material exits. The overall diameter of the entry face 9a is greater than the exit face 9b.

In an original way, the die 8 comprises a first plate 10 fastened to the head 4 of the extruder 1 and a second plate 11 mounted detachably on the first plate 10. In particular, in the example illustrated in the figures, the second plate 11 is mounted directly on the first plate 10. In particular, the first plate 10 is fastened to the extruder head 4 by first fastener means 12, which may take the form of threaded components. In the example illustrated in the figure the second plate 11 is mounted on the first plate by means of the same first fastener means 12, whereas in a possible embodiment which is not illustrated, second fastener means are provided between the first plate 10 and the second plate 11 and define the abovementioned detachable connection. These second fastener means may similarly be threaded components, though fewer in number than the first fastener means because the pressure to which the thermoplastic material is subjected in the second plate is less than that to which it is subjected in the first plate.

The first plate 10 has first sections 14 of the extrusion lands 9, while the second plate 11 has second sections 15 of the extrusion lands 9, their longitudinal axis being a continuation of the longitudinal axis of the first sections 14.

The figures illustrate a longitudinal cross section through the extrusion lands of the die 8, and in particular of the second sections 15.

The first sections 14 of the extrusion lands 9 have a longitudinal cross section with a section of the profile that decreases in the direction of movement of the material being extruded. In more detail, the first sections of the extrusion lands comprise a frustoconical form and their profile comprises a line that is inclined with respect to the longitudinal axis of the extrusion land.

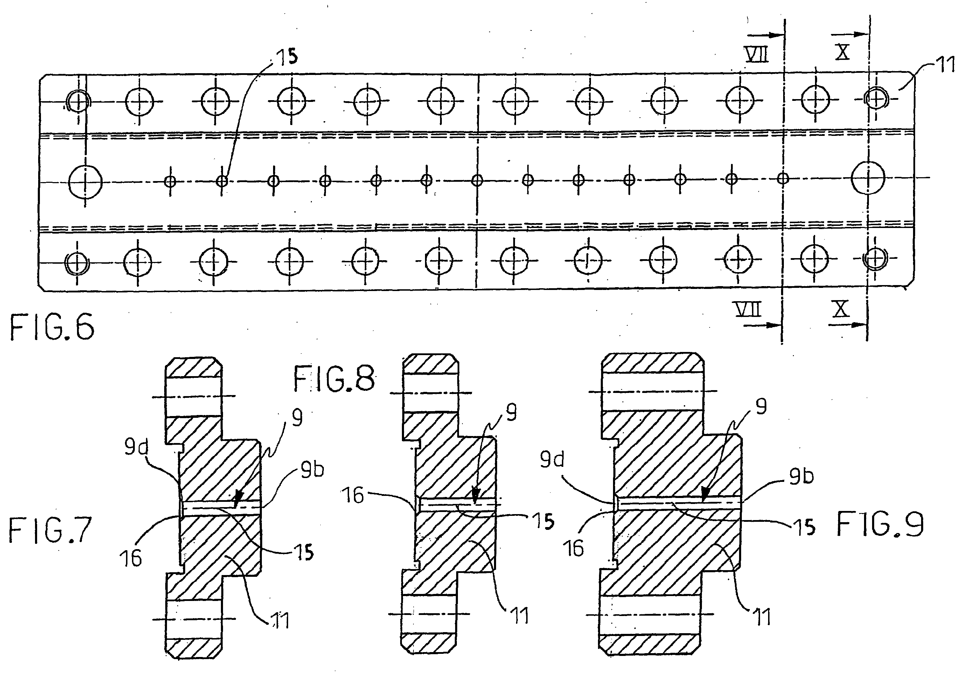

The second sections 15 of the extrusion lands 9 have a transverse cross section whose dimensions are effectively constant through the thickness of the second plate. In a longitudinal cross section the profiles of the second sections are straight and parallel to the corresponding longitudinal axis. In particular, the second sections 15 of the extrusion lands 9 have a cylindrical form which extends continuously from the frustoconical section. A number of second plates 11 with their respective second sections 15 are illustrated in Figures 7, 8 and 9.

Illustrated in Figure 7 is a longitudinal cross section through the second sections 15, corresponding to a cylindrical configuration with a diameter of 3.5 mm and to a thickness of the second plate equal to 22 mm. Similarly in Figure 8 the second plate has a thickness of 22 mm while the second section has a diameter of 3 mm. Lastly, Figure 9 illustrates a second plate 11 whose thickness is 33 mm while the diameter of the second section is 3 mm.

The first section 14 extends from the entry face 9a to an intermediate exit face 9c which is smaller than the said entry face 9a, while the second section 15 extends from an intermediate entry face 9d to the exit face 9b, the dimensions of which are approximately equal to the intermediate entry face 9d.

As shown in Figures 7, 8 and 9, the intermediate entry face 9d of the second sections 15 of the extrusion lands comprises a chamfered profile 16 to help the extruded material advance from the first section 14 to the second section 15 of the lands 9 and the correct lining-up of the intermediate exit face 9c and the intermediate entry face 9d.

The first section 14, which has a frustoconical configuration, is designed to convey the molten polymer from the extruder header 4 to the second section 15 where the configuration is cylindrical. The latter section is designed to give the polymer material its final "spaghetti-like" configuration.

For the purposes of the process, the relevant variables are the slope of the first or frustoconical section 14 together with the diameter and length of the second or cylindrical section 15.

The die 8 is the most important component in controlling the extrusion process because it makes it possible to set up the correct pressure for extrusion of the molten polymer.

Provided certain parameters - such as the type of polymer and hence its rheological curve, the process conditions in the sense of flow rate and temperature of the molten polymer, and the geometry and parts that make up the discharge region - are known, it is possible to calculate the pressure drop to which any polymer is exposed on its path through the extruder 1.

Provided the polymer is known and the process conditions are defined, significant modifications can be made to the pressure drop by modifying the geometry of the die 8, and in particular of the extrusion lands 9.

In fact it can be shown that, of all the parts that make up the discharge region, the greatest contribution to the pressure drop is surprisingly due to the presence of the second or cylindrical section 15 and therefore to the second plate of the die 8.

The extruder 1 is therefore composed of a discharge region, whose components remain substantially unchanged until the first plate 10, and of a variable number of second plates 11 that can be mounted on the first plate 10 to modify the process conditions.

The second sections 15 of the extrusion lands of each second plate 11 differ, from one plate to the next, either in terms of diameter or of length or of both parameters. Variations to these parameters influence the pressure drop of the polymer along its path through the extruder and hence influence the control of the extrusion process.

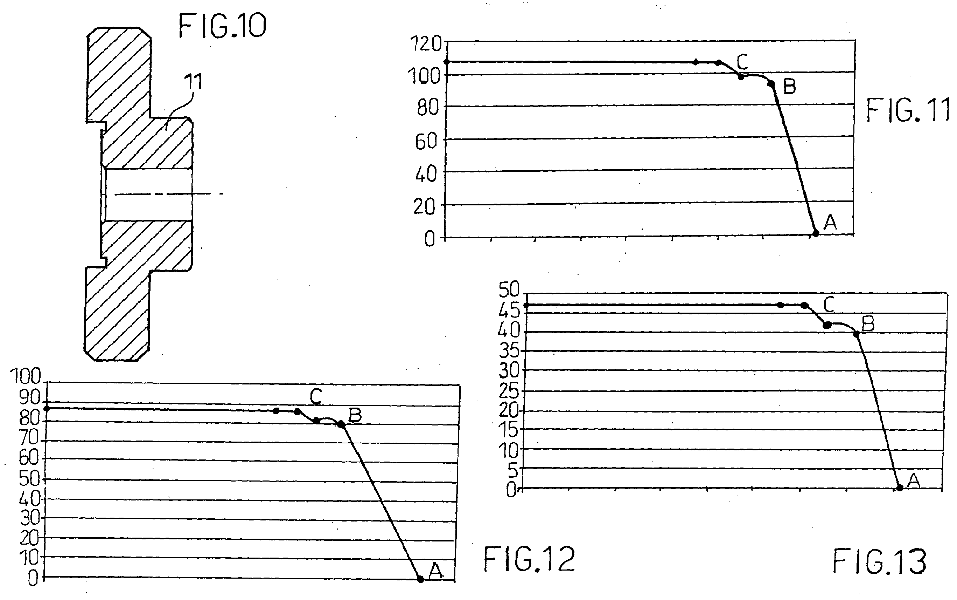

For instance, Figures 11-13 show a number of diagrams of the pressure drop as a function of distance from the die exit. For ease of understanding, proceeding backwards relative to the direction in which the thermoplastic material traverses the extruder 1, the letter A denotes the point at zero pressure corresponding to the die exit face 9b and hence to the external environment.

The letter B denotes the point of transition between the second sections of the extrusion lands and the first sections of the extrusion lands, corresponding essentially to the region of the intermediate exit face and to the intermediate entry face.

The letter C denotes the point of transition between the die and the extruder exit region, corresponding, for example to the exit face from the extruder head. The other points of the graph correspond to a section of effectively constant pressure or pressure having limited variation corresponding essentially to interposed components (if any) and to the body of the barrel.

Figure 11 corresponds to the pressure drop obtained in the second sections 15 having e.g. diameter 3 mm and length 20 mm. Figure 12 corresponds to the pressure drop obtained in the second sections 15 having e.g. diameter 4 mm and length 40 mm. Lastly, Figure 13 corresponds to the pressure drop obtained in the second sections 15 having'diameter 4 mm and length 20 mm.

Each of the abovementioned second plates 11 therefore constitutes an accessory for an extruder die, and as such can be considered as an independent part comprising a plate provided with extrusion lands that extend from the intermediate entry face 9d to the exit face 9b, in which the exit face 9b is approximately the same size as the intermediate entry face 9d.

Each accessory, that is each plate, can be mounted on the die by means of first or second fastener means in such a way as to modify the pressure of the material being extruded.

Using the second plates or the accessories as illustrated above it is possible to carry out a method of varying the pressure of a material being extruded, inside an extruder die, and consequently obtain large variations in the process conditions. In an original way, this method comprises varying the configuration of the second sections of the extrusion lands formed in the abovementioned plates or in the abovementioned accessories.

This varying may involve varying the diameter of the second sections of the extrusion lands or the length of the second sections of the extrusion lands. In practice the abovementioned varying is carried out by replacing the second plate, or the corresponding accessory, which comprises the second section of the extrusion lands, while keeping the first plate, which comprises the first section of the extrusion lands, fixed in position.

There now follows a description of the fitting and replacing of a die or accessory in accordance with the present invention.

By removing and replacing the corresponding first or second fastener means, a second plate having predetermined geometrical parameters is fastened to the first plate in order to give rise to a continuous extrusion land extending through the first or frustoconical section, corresponding to the first plate, and continuing through the second or cylindrical section, corresponding to the second plate.

In order to operate with different pressure drops it is possible to remove the second plate, or the corresponding accessory, and replace it with another having different geometrical characteristics, i.e. in which the second sections of the extrusion lands vary either in terms of diameter or length or both of these parameters.

As will be appreciated from the above account, the die according to the present invention fulfils the abovementioned need to modify the process conditions to which the polymer material is subjected, optionally without the need to replace the whole die and keep a stock of a somewhat large number of different dies to make such replacements possible.

Furthermore, the die according to the invention reduces machining costs because the manufacture of the first sections 14 of the extrusion lands 9 requires machining which is of the order of four times that required for the second section 15, the first sections being frustoconical while the second are cylindrical.

It is consequently possible to produce one first plate comprising the first sections of the extrusion lands 9 and a variable number of second plates that have different effects on the process conditions depending on the diameter and/or length of the respective second sections of the extrusion lands.

By using accessories such as those described above, the method according to the present invention can if required be applied also to extruders and dies of known type, resulting in variations in the process conditions, i.e. pressure and temperature of the polymer material as it passes through the die.

Clearly, variations and/or additions to what has been described above and illustrated can be made.

For example, in a similar way to that explained above, the die of the present invention can be applied not only to a twin-screw extruder but also to a single-screw extruder, in which for example the extruder head represents the part where the circular cross section at the barrel outlet changes to the elliptical cross section at the die entry.

In order to satisfy various contingent and specific requirements, a person skilled in the art will be able to make numerous modifications, adaptations and substitutions of components with other functionally equivalent components, to the preferred embodiment of the die and accessories or execution of the method described above, without however departing from the scope of the following claims.

## Claims

1. Die (8) for extruder (1) comprising extrusion lands (9) provided with an entry face (9a) in communication with an extruder head (4) that forms part of the extruder and with an exit face (9b) through which the extruded material exits, the said entry face (9a) having a larger diameter than the said exit face (9b), which die is **characterized in that** it comprises, functionally connected to the head (4) of the extruder, at least one first plate (10) provided with first sections (14) of the extrusion lands (9) that extend from the said entry face (9a) to an intermediate exit face (9c) and, mounted detachably on the said first plate (10), at least one second plate (11) provided with second sections (15) of the extrusion lands (9) that extend from an intermediate entry face (9d) to the said exit face (9b).

2. Die according to Claim 1, in which the said first sections (14) of the extrusion lands (9) extend from the entry face (9a) to the intermediate exit face (9c), which is smaller than the said entry face (9a).

3. Die according to one of the preceding claims, in which the said second sections (15) of the extrusion lands (9) extend from the intermediate entry face (9d) to the exit face (9b), which is approximately the same size as the said intermediate entry face (9d).

4. Die according to one or more of the preceding claims, in which the said first sections (14) of the extrusion lands (9) have a longitudinal cross section whose profile decreases in the direction of movement of the material being extruded.

5. Die according to Claim 4, in which the said first sections (14) of the extrusion lands (9) have a frustoconical form.

6. Die according to one of the preceding claims, in which the said second sections (15) of the extrusion lands (9) have a cross section of essentially constant dimensions.

7. Die according to Claim 6, in which the said second sections (15) of the extrusion lands (9) have a cylindrical form.

8. Die according to one or more of the preceding claims, in which the said intermediate entry face (9d) of the second sections (15) of the extrusion lands (9) comprises a chamfered profile (16).

9. Die according to one or more of the preceding claims, in which the second plate (11) is mounted on the first plate (10) by first fastener means (12) that fasten said first plate (10) to the extruder (1).

10. Die according to one or more of Claims 1 to 8, in which the first plate (10) is mounted on the extruder (1) by first fastener means (12) and the second plate (11) is mounted on the first plate (10) by second fastener means independent of the first fastener means.

11. Accessory, for extruder die provided with first sections (14) of extrusion lands (9), the said accessory comprising a plate (11) provided with extrusion lands (9) that extend from an intermediate entry face (9d), which can be in communication with the first sections (14), to an exit face (9b) which is approximately the same size as the said intermediate entry face (9d), the said plate (11) being connectable to the extruder (1) in order to modify the pressure of the material being extruded.

12. Method of varying the pressure of a material being extruded, inside an extruder (1) die (8), the said material passing through first sections (14) and second sections (15) of extrusion lands (9), which method comprises varying the configuration of the second sections (15) of the extrusion lands (9).

13. Method according to Claim 12, in which the material being extruded passes through the first sections (14), whose longitudinal cross section has a profile that decreases in the direction of movement of the material being extruded, and then passes through the second sections (15) whose cross section has essentially constant dimensions.

14. Method according to either of Claims 12 and 13, in which the said varying involves varying the diameter of the second sections (15) of the extrusion lands (9).

15. Method according to one of the preceding claims, in which the said varying involves varying the length of the second sections (15) of the extrusion lands (9).

16. Method according to one of Claims 12 to 15, in which the said varying comprises substituting a second plate (11) comprising the second sections (15) of the extrusion lands (9), while a first plate (10) comprising the first sections (14) of the extrusion lands (9) is kept fixed in position.
